Europäisches Patentamt

European Patent Office

Office européen des brevets

(11) Publication number: **0 061 278**
**A1**

(12) # EUROPEAN PATENT APPLICATION

(21) Application number: **82301310.7**

(22) Date of filing: **15.03.82**

(51) Int. Cl.³: **G 02 B 5/14**
**C 04 B 43/10, C 03 C 25/02**

(30) Priority: **19.03.81 GB 8108707**

(43) Date of publication of application:
**29.09.82 Bulletin 82/39**

(84) Designated Contracting States:
**DE FR GB NL**

(71) Applicant: **IMPERIAL CHEMICAL INDUSTRIES PLC**
**Imperial Chemical House Millbank**
**London SW1P 3JF(GB)**

(72) Inventor: **Ford, Roger Roydon**
**27 Langham Road Bowden**
**Altringham Cheshire(GB)**

(72) Inventor: **Murray, Robert Thomas**
**Nether Stowey Bates Lane**
**Helsby Cheshire(GB)**

(74) Representative: **Oldroyd, Alan et al,**
**Imperial Chemical Industries PLC Legal Department:**
**Patents Thames House North Millbank**
**London SW1P 4QG(GB)**

(54) Improved fibre optics systems.

(57) Fibre Optics systems comprising a coating of a layer mineral and methods for the preparation of such systems.
The presence of the layer mineral enhances resistance to high temperature.

EP 0 061 278 A1

Croydon Printing Company Ltd.

Q 31739/EP

Improved Fibre Optics Systems

This invention relates to fibre optics systems and to their production.

Fibre optics systems and the principle of their operation, which is essentially the transmission of radiation, usually light of wavelength range $0.3\mu m$ to $2\mu m$ along a fibre within which the radiation undergoes total internal reflection, are well known. Such systems consist, at their simplest, of a fibre, usually of glass or similar material together with associated means for generating radiation of a suitable wavelength at one end of the fibre and at the other end means for detecting radiation transmitted along the fibre. More sophisticated systems commonly comprise a plurality of fibres, radiation generators, splitters, modulators, switches and detectors, etc, all depending for their effective performance upon the integrity of the fibres and their associated components.

Increasingly fibre optics systems are being employed in instrument and plant control where, however, they are liable to damage, either mechanical, chemical or by heat, for example generated by fire.

2

We have found that the resistance of a fibre optics system to damage by heat may be enhanced by providing at least part of the fibre optics system with a coating which is capable of insulating at least partially the coated part against heat and/or capable of providing support to the coated part in the event that it tends to become displaced or disorganised as a consequence of heat, fire or other damage. Displacement may involve, for example movement of the system or part of it in the event that a support is damaged or destroyed. Disorganisation may involve, for example, some misalignment of two or more components of the system whereby transmission of the signal is affected adversely.

According to one aspect of the invention, therefore, there is provided a fibre optics system applied to at least a part of which is a coating of a layer mineral which is capable of insulating at least partially the coated part of the system against heat and/or capable of providing support to the coated part of the system in the event that it tends to become displaced or disorganised as a consequence of heat, fire or other damage.

According to another aspect of the invention we provide a method for the production of an improved fibre optics system which comprises applying to at least part of a fibre optics system a coating of a layer mineral capable of insulating at least partially the coated part of the system against heat and/or capable of helping to support the coated part of the system in the event that it tends to become displace or disorganised as a consequence of heat, fire or other damage.

Inorganic materials, and in particular inorganic layer minerals, are preferred components of the coating.

Vermiculite is the preferred layer mineral. By "Vermiculite" we mean all materials known mineralogically and commercially as vermiculite, including the chlorite-vermiculites.

By the term "layer mineral" as used throughout this specification we mean tiny particles or platelets of th layer mineral obtained by chemically and/or mechanically delaminating the layer mineral into particles or platelets having a high aspect ratio. Thus, for example vermiculite particles are tiny platelets or lamellae obtained by chemical delamination of vermiculite and having a thickness of less than 0.5 micron, usually less than 0.05 micron and preferably less than 0.005 micron, and having an aspect ratio (i.e. length or breadth divided by thickness) of at least 100, preferably at least 1000, for example, 10,000.

Other layer minerals which may be used include montmorillonite, laolinite (and clays comprising kaolinite, for example kaolins and ball clays) and other layer-scilicate minerals which can be delaminated to lamellae or plate-like particles. Vermiculite, however, is very much more effective in the application of the invention and is particularly preferred.

The coating may be present on the individual fibres of the system, as a layer in which the fibres are embedded or as a coating or layer surrounding a plurality of fibres or any othe component of the system. Indeed we have found that vermiculite preparations of the kind described have marked adhesive properites and they may, therefore, act advantageously in helping to bind components of the system together and/or to other, possibly supporting, structures.

The amount by weight of coating applied may vary within wide limits depending for example upon the intended fire/temperature duty of the system, its desired flexibility, the required degree of structural integrity, and the likelihood of mechanical damage. In general, increasing the thickness of the coating will increase the fire-performance and the thermal conditions which the coated components will withstand. We have observed, however, that in general even a very thin layer of coating for ecample less than 10 micron thickness, may be sufficient to upgrade the fire-performance and the high-temperature performance of the system. As a guide only, the loading of coating on the system composite will usually be from 0.05% to 100% by weight, typically from 0.1% to 20% by weight, although a heavier coating than this may sometimes be used with advantage.

The improved systems of the invention are made by applying coating material to the system or part systems . to be coated. Usually the coating material will be applied from a suspension (for example of vermiculite lamellae) in a carrier liquid which may be for example an organic liquid, or water or another aqueous medium. Conveniently the suspension obtained in the process used for chemical delamination of layer minerals can be used directly to form the coating material. If desired, however, lamellae in the form of a free-flowing dry powder (as described for example, in our European Patent Publication No. 0009.311A) may be suspended in any suitable carrier liquid to form the coating material. The solids content, (e.g. lamellae) of the suspension is not critical and any stable suspension may be employed. Typically, the solids content of the suspension will be up to 40% by weight of the suspension but for the production of thin coatings may be much less for example as little as 2 to 5% by weight. Preferably the solids content of the suspension for most applications will be from 10% to 20% by weight. After application of the suspension the carrier liquid is removed, usually by evaporation, to leave the solid coating deposited, preferably as a coherent layer. If desired excess carrier liquid may be allowed to drain from the coated product prior to heating it to remove residual carrier liquid. The temperature at which the suspension is applied can be any temperature up to the boiling point of the carrier liquid, providing of course that the fibre optics or part thereof is not damaged thereby. Additives can be added to the coating slurry in order to modify the fire, mechanical, etc. properties of the coating. For example water dispersible organic materials may improve the flexibility and abrasion resistance of these coatings.

The suspension (or slurry as it may also be termed) can be applied by any known technique, including brushing (painting), spraying, doctoring, licking, knife-coating, 'nip' coating, roller-coating, dip-coating and impregnation. It is a simple matter for the operator to choose a suspension strength and an application technique appropriate to applying the desired loading of lamellae onto the component to be coated. If desired, the suspension of lamellae (in the case of vermiculite lamellae) may be gasified to produce a froth so that the vermiculite content of the resulting coating after drying may be present as a cellular (rigid foam) matrix. Conversion of a suspension of vermiculite lamellae to rigid foams is described, for example, in our United Kingdom Patent specification No. 1,585,104.

As stated hereinbefore, vermiculite, is the preferred layer material. The reason for this preference is that in addition to conferring good fire resistance and thermal performance to the fibrous composite materials, vermiculite almost alone among the layer minerals exhibits excellent self-adhesion properties. Upon removal of the water (or other carrier liquid) from suspensions of vermiculite lamellae, the lamellae adhere together to form a relatively strong layer of vermiculite, and systems containing vermiculite lamellae benefit from this self-adhesion characteristic of the applied lamellae in that their strength and durability may be improved. The deposited vermiculite lamellae may act as an adhesive to bond the fibres or other components of the systems together.

A still further advantage afforded by coating fibres or other components with vermiculite is that the coating is chemically inert and in particular is acid and alkali resistant. Thus fibres which are not normally useable in alkaline environments, for example glass fibres, might be rendered suitable for such use.

Our European Patent Publication No 9.310 A1 describes vermiculite based materials having water resistance, and such may be employed according to the present invention.

Magnesium oxide is of preferred water-stability improver and in addition to conferring water-stability this additive enhances the strength of the coating. Magnesium oxide is a particularly desirable additive to gasified (frothed) vermiculite suspensions used to form the coatings in that it additionally enhances the compressive strength of the cellular vermiculite matrix. The amount of water-stability improver will usually be up to 15% by weight, typically 10%, based on the lamellae.

Water-proofing of the coatings as opposed to improving their stability in liquid water, can be effected by incorporating a silicone polymer precursor in the suspension of lamellae prior to application of the coating and treating the coated products with an acidic gas in the presence of water to polymerise the precursor and form a silicone polymer. Such water-proofing process is described in our co-pending United Kingdom Patent Application No 8103459. Thus, for example, sodium methyl siliconate can be incorporated in the suspension and the resulting coated product treated with carbon dioxide in the presence of water (during drying or subsequent to drying the coated product and re-wetting it) to effect polymerisation. The amount of silicone polymer precursor added to the suspension will usually be up to about 5% by weight typically about 2% by weight, based on the lamellae.

Any suspension of lamellae of layer minerals may be used to form the coatings of the invention. Chemical delamination of layer minerals is well known and any of the known chemical delamination processes may be employed, including the processes described for deliminating vermiculite in United Kingdom Patent Specifications Nos. 1,016,385; 1,076,786; 1,119,305; and by Baumeister and Hahn in "Micron" 7 247 (1976) and in our United Kingdom Patent Applications Nos. 14764/76 and 39510/76: 51425/76. Preferably, the suspension of chemically delaminated layer mineral is subjected to a wet-classification treatment in which larger particles of the mineral are removed, as is described in respect of suspensions of vermiculite lamellae in United Kingdom Patent Applications Nos. 39510/76: 51425/76 (and German OLS 2.741.859). For use in the process of the present invention, the suspension preferably is wet-classified to a particle size (platelets) below 50 microns and especially to below 20 microns so that the suspension used exhibits colloidial properties. Typical suspensions of vermiculite lamellae obtained by the process described in United Kingdom Patent Applications Nos 14764/76 and 39510/76: 51425/76 (and corresponding German OLS 2,741,857 and 2,716,152) wet-classified to paricles of below 50 microns comprise about 40% of paricles in the size range 0.4 to 5.0 microns.

The invention covers particularly the use of a coating not only upon the fibres or portions thereof as such but preferably upon some or all of associated components, for example radiation generators, detectors switches, splitters, samplers, modulators etc and in particular will often usually bridge the junction between such components and the fibres themselves. The method of application of the mineral will obviously be such as is compatible with the characteristics of the components being treated and the need for them to remain operable. Thus, if, for example, the presence of an aqueous liquid would be disadvantageous the mineral may be deposited from a non-aqueous liquid, or even in the form

8

of a dry particulate material for example on to a suitable compatible adhesive coating.

The invention includes in situ coating of the fibre optics system or part thereof by any convenient technique, for example by painting or spraying on a suspension of the mineral or by applying an adhesive followed by spraying with a dry powder. The technique of in situ coating is particularly convenient as the system or part of it may be located in relation to adjacent fittings and the mineral subsequently applied so that exposure of the uncoated junctions as other regions or components is less likely, or removal of remedied applied coating by abrasion during installation avoided. Of course part or all of the system may be coated before and after installation.

The invention is illustrated but in no way limited by the following Example.

Preparation of vermiculite suspensions

150 parts of vermiculite ore (Mandoval micron grade ex-South Africa) are agitated with saturated sodium chloride solution in 1:2 ratio in a tank for 30 minutes at 80°C. This suspension is then centrifuged and washed with deionised water. The wet cake is transferred to a second tank where the vermiculite is stirred with 1.5N n-butylamine hydrochloride (2:1 liquid:solid ratio) for 30 minutes at 80°C. This suspension is then centrifuged and washed with deionised water before transferring the wet cake to a swelling tank in which the vermiculite is stirred in deionised water. After swelling the suspension is approximately 20% solids and the particles random sized in the range 300-400 micron. This suspension is then passed through a stone-type mill which reduces approximately 50% particles to less than 50 microns. This milled suspension is classified in a weir-type centrifugal classifier and the lighter particles with sieve size less than 50 micron collected for use. Ananlysis of this 18-21% solids suspension by photodenstometer and disc centrifuge reveals approximately 40% pariclas having a size ("equivalent spherical diameter") of 0.4-1.0 micron. The solid content of the suspension is readily adjusted by adding water to it or removing water from it.

Coating Procedure

A 1' length of fibre optics Hytran 250 was half coated with vermiculite by immersing half its length in a 19.4% $^w/_w$ vermiculite suspension, withdrawing it from the suspension and drying in an oven at 80°C for 0.5 hours. This gave a coating 10mm thick. This half coated fibre optic was then placed in a furnace at 800°C for 5 minutes, removed, and its physical appearance examined. Whereas the uncoated half of the sample had melted completely the physical integrity of the coated half was completely maintained. Furthermore, upon removal of the half coated sample from the furnace and passing a beam of 0.6mm radiation along its length, good transmission was achieved.

Coating with Dry Vermiculite Powder

A slurry of the classified vermiculite particles, having an average size of 2 microns, was spray dried to give a free flowing powder consisting largely of individual particles.

A 10 m length of fibre optics Hytran 250, which had been pre-coated with a vermiculite slurry and dried, was threaded through a series of supports and connected to a splitter at one end and an electronic booster unit at the other. The fibre, splitter box and booster unit were coated with an epoxy resin adhesive and the whole, including particularly the junctions and points at which the vermiculite precoating had been slightly abraded in threading, were sprayed with the vermiculite powder to form a continuous coating on the adhesive.

The system retained its integrity and operability after exposure to high temperature, and also showed resistance to penetration of water vapour to the fibre and junctions.

1.    A fibre optics system in which there is applied to a least a part thereof a coating of a layer mineral which is capable of insulating at least partially the coated portion of the system against heat and/or capable of providing support to the coated portion of the system in the event that it tends to become displaced or disorganised.

2.    A system according to claim 1 in which the layer mineral bridges a junction between a fibre and at least one other component of the system.

3.    A system according to claim 1 or 2 in which the layer mineral is vermiculite.

4.    A system according to claim 3 in which the vermiculite is chemically delaminated.

5.    A system according to any one of the preceding claims in which the lamellae of the layer mineral are substantially all of maximum dimension 50 microns.

6.    A system according to any one of the preceding claims in which the layer mineral is present in the form of a dry rigid foam.

7.    A method for the production of an improved fibre optics system which comprises applying to at least part of the system a coating of a layer mineral.

8.    A method according to claim 7 in which a suspension of lamellae of a layer mineral is applied and liquid medium removed from the suspension.

9.    A method according to claim 7 or 8 in which the mineral is applied to at least one of the components of the system prior to construction of the system.

10.    A method according to claim 7,8, or 9 in which a material having adhesive properties is applied to at least part of the system and the layer mineral is applied in any form to the adhesive with the foundation of the mineral layer.

11.    A method according to any one of claims 7 to 10 in which the mineral is subjected to a size grading process and substantailly only lamellae of maximum dimension below 50 microns applied to the system.

12. Apparatus or equipment comprising the system of any one of claims 1 to 10.

## DOCUMENTS CONSIDERED TO BE RELEVANT

| Category | Citation of document with indication, where appropriate, of relevant passages | Relevant to claim |
|---|---|---|
| A,D | EP - A1 - 0 009 310 (IMPERIAL) <br><br> -- | |
| A,D | EP - A1 - 0 009 311 (IMPERIAL) <br><br> * Page 1, line 1 - page 4, line 21 * <br><br> -- | 4-6,8 |
| A,D | GB - A - 1 585 104 (IMPERIAL) <br><br> * Page 1, line 33 - page 3, line 15 * <br><br> -- | 4-6,8 |
| A,D | DE - A1 - 2 741 857 (IMPERIAL) <br><br> * Claims 1-9, 16* <br><br> & GB-A-1 593 382 <br><br> -- | 4,5, 11 |
| A | GB - A - 726 563 (DOW) <br><br> * Page 1, lines 42-81; Page 2, lines 81-85 * <br><br> -- | |
| A | GB - A - 1 585 899 (PLESSEY) <br><br> * Page 1, lines 9-47; claims 1,3,4 * <br><br> -- | |
| A | GB - A - 2 038 021 (NIPPON) <br><br> * Page 1, lines 14-34; claims 1-5,7 * <br><br> ----- | |

**CLASSIFICATION OF THE APPLICATION (Int. Cl. 3)**

G 02 B 5/14
C 04 B 43/10
C 03 C 25/02

**TECHNICAL FIELDS SEARCHED (Int.Cl. 3)**

G 02 B 5/00
C 03 C 25/00
C 04 B 43/00
H 01 J 29/00
C 01 B 33/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | | |
|---|---|---|---|
| X | The present search report has been drawn up for all claims | | |

| Place of search | Date of completion of the search | Examiner |
|---|---|---|
| VIENNA | 11-06-1982 | GRONAU |

EPO Form 1503.1 06.78